# EUROPEAN PATENT APPLICATION

(11) **EP 1 079 304 A1**
(43) Date of publication of application: **28.02.2001**
(21) Application number: 99402135.0
(22) Date of filing: 27.08.1999
(51) Int. Cl.: G06F 11/00

(54) **Microprocessor with debugging system**

(71) Applicant: MOTOROLA SEMICONDUCTEURS S.A., 31023 Toulouse Cédex (FR)
(72) Inventor: Bertrand, Patrice, 31200 Toulouse (FR); Combes, Alain, 31100 Toulouse (FR)
(74) Representative: Joly, Jean-Jacques

(57) **Abstract**

A data processing system has a central processing unit arranged to process a set of instructions, a number of internal registers coupled to the central processing unit and an external memory coupled via a bus to the central processing unit. A logic arrangement connected to the bus monitors data exchanged between the central processing unit and the external memory, in order to halt the processing of the set of instructions when a specific data value is present. This logic arrangement also monitors data exchanged between the internal registers and the central processing unit, in order to halt the processing of the set of instructions when a specific data value is present.

## Description

### Field of the Invention

This invention relates to a data processing system and method, and particularly but not exclusively to such system and method in debugging applications.

### Background of the Invention

During the debugging of a microprocessor program, hardware debugging apparatus is able to stop execution of the program upon the occurrence of a user specified condition (so called 'breakpoint'). This facilitates interrogation of the state of various memories and registers associated with the microprocessor such that the programmer is alerted to any erroneous data calculations or other mistakes in the program. If breakpoints were not used, the programmer would only be able to view the state of such memories and registers when the program has been completed, thus making it more difficult to identify and correct errors.

Microprocessors typically have both internal registers and external registers and memories. Current debugging hardware is typically arranged to catch data traffic flowing between the microprocessor core and the external registers and memories. Most processors do not provide debugging hardware which can work on internal registers.

Therefore there is a problem in that breakpoints cannot be identified and executed for internal register data. A number of known solutions to this problem exist. In one arrangement every piece of data written to an internal register is copied into external memory through a memory bus. In another arrangement specific instructions have to be counted and additional processing has to be conducted to ensure that the breakpoint triggering value(s) has been written to the internal register.

Therefore using these solutions an additional overhead is required in terms of processing, memory usage and/or complexity.

This invention seeks to provide a data processing system and method which mitigate the above mentioned disadvantages.

### Summary of the Invention

According to a first aspect of the present invention there is provided a data processing system as claimed in claim 1.

According to a second aspect of the present invention there is provided a data processing method as claimed in claim 2.

In this way a simple hardware arrangement is provided which enables breakpoints to be identified and executed on internal registers, without the need for additional memories or processing steps.

### Brief Description of the Drawings

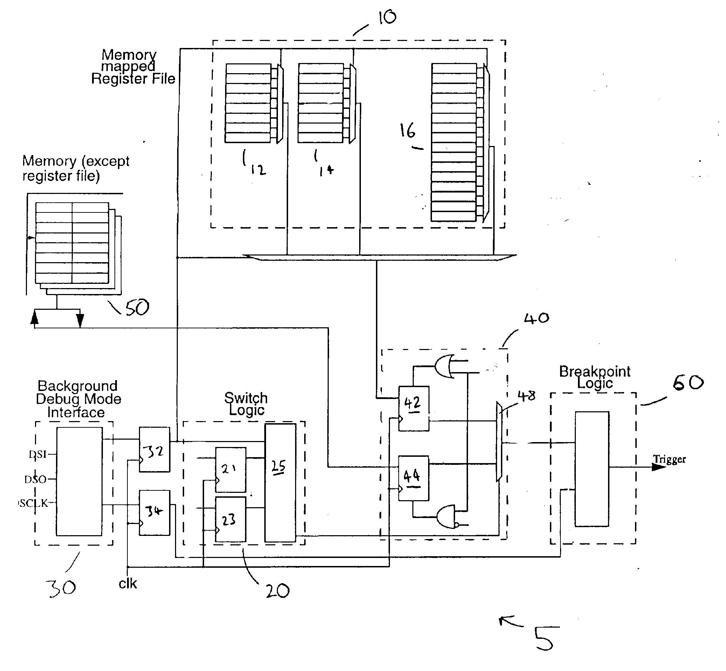

An exemplary embodiment of the invention will now be described with reference to the single figure drawing which shows a preferred embodiment of a data processing system in accordance with the invention.

### Detailed Description of a Preferred Embodiment

Referring to the single figure drawing, there is shown a data processing system 5 including a memory mapped register file 10, switch logic 20, background debug mode interface 30, combination logic 40, memory 50 and breakpoint logic 60. A clock 7 provides the system clock to all of the components. The system also has a Central Processing Unit (not shown) which is co-located (on the same integrated circuit) with the memory mapped register file 10, and coupled via address and data busses to the memory 50.

The memory mapped register file 10 has a plurality of registers 12, 14, 16 etc... for exchanging data with the CPU. The memory 50 is coupled to the CPU via address and data buses (not shown), and is also arranged for exchanging data with the CPU. The time taken to exchange data between the memory mapped register file 10 and the CPU is relatively fast since they are located on the same integrated circuit. However, the time taken to exchange data between the memory 50 and the CPU will be relatively slower. Therefore the data associated with many intermediate calculations and highly repetitive tasks handled by the CPU are not stored in the memory 50 but in the memory mapped register file 10.

The switch logic 20 has first and second latches 21 and 23, each having clock inputs coupled to the clock 7, data inputs and data outputs coupled to a selector 25 to be further described below.

The background debug mode interface 30 has a DSI (Development Serial Input) a DSO (Development Serial Output) and a DSCLK (Development Serial Clock) coupled to the clock 7. These are the so called BDM (Background Debug Mode) ports, and they provide a high speed serial command interface between the system 5 and the user's development workstation. The background debug mode interface 30 provides a means for a system user to set breakpoints, to be further described below. First and second interface flip-flops 32 and 34 respectively have inputs coupled to receive data from the background debug mode interface 30 and clock inputs coupled to the clock 7. The first interface flip-flop 32 has an output coupled to the selector 25 of the switch logic 20 and the second interface flip-flop 34 has an output coupled to the breakpoint logic 60.

The combination logic 40 has a first flip-flop 42 having an input coupled to receive data from the memory mapped register file 10 and a second flip-flop 44 having an input coupled to receive data from the memory 50. The first and second flip-flops 42 and 44 also have clock inputs coupled to the clock 7 and outputs, coupled to a mux block 48.

The breakpoint logic 60 is coupled to receive an output from the mux block 48 of the combination logic and an output from the second interface flip-flop 34. for providing a trigger signal in dependence upon the received outputs, which halts the activity of the CPU.

In operation, the system user may set a breakpoint condition, typically by using a software package running on a Personal Computer (PC) linked to the background debug mode interface 10. For example, a statement such as "i = function(a, b)" may be identified in the source code and from a pop-up menu the value "i = 255 (0xFF)" may be set by the user as the value of i which should trigger a breakpoint.

The PC interprets the users commands which are in a 'high level' format, and this is translated into meaningful data to for the background mode interface 10.

In the present example, to break on internal data, two conditions must be specified: an address and a data value (in this case the user wishes to halt the program when i = 255). When the program is compiled the compiler will know where i is stored (i.e. it will know its address), and this information together with data = 255 will be used to send the appropriate commands.

The first interface flip-flop 32 provides the address of the appropriate register to the memory mapped register file 10, which selects the appropriate address and provides the register value to the input of the first flip-flop 42. The second interface flip-flop 34 provides the desired value of the breakpoint data to the breakpoint logic 60.

In a similar way the second flip-flop 44 holds the value of the selected address of the memory 50.

The selector 25 of the switch logic 20 drives the mux block 48 of the combination logic 40 to switch between the first and the second flip-flops 42 and 44 respectively, according to the address value received from the first interface flip-flop 32.

For example, a break on an internal register rather than on a memory location is desired. The address will be in a specific address range, that of the memory mapped registers. The address will be fed to the debug mode interface 30 through the DSI pin.

The address fed through the DSI pin will end up in the first interface flip-flop 32. The address will be compared to the address range of the memory mapped area and if the address is in the range, selector 25 will cause the mux block 48 to be set so that the first flip-flop 42 is enabled and the data sent to the breakpoint logic 60 is that originating from the memory mapped register file 10 rather than that coming from the memory 50.

Thus the contents of either the first or the second flip-flop 42 or 44 will be input to the breakpoint logic 60, where it is compared with the desired value of the breakpoint data. If these match, then the trigger signal is sent, which halts the CPU.

In this way a breakpoint can be set and monitored in both the memory 50 and the memory mapped register file 10.

It will be appreciated that alternative embodiments to the one described above are possible. For example, the precise logic arrangements and memory mapping arrangements of the system may differ from those shown and described above.

## Claims

1. A data processing system comprising:
a central processing unit arranged to process a set of instructions;
a plurality of internal registers coupled to the central processing unit for exchanging data therewith during the processing of the set of instructions;
at least one external memory coupled via a bus to the central processing unit for exchanging data therewith during the processing of the set of instructions; and,
logic means coupled to the bus for monitoring the data exchanged between the central processing unit and the external memory, and arranged to halt the processing of the set of instructions in dependence upon the exchange of a predetermined value of the monitored data between the central processing unit and the external memory;
wherein the logic means is also coupled to monitor the data exchanged between the plurality of internal registers and the central processing unit, such that the logic means is able to halt the processing of the set of instructions in dependence upon the exchange of a predetermined value of the monitored data between the central processing unit and the plurality of internal registers.

2. A data processing method for a central processing unit arranged to process a set of instructions, the method comprising the steps of:
exchanging data between the central processing unit and a plurality of internal registers during the processing of the set of instructions;
exchanging data between at least one external memory and the central processing unit via a bus;
monitoring the data exchanged between the central processing unit and the external memory;
halting the processing of the set of instructions in dependence upon the exchange of a predetermined value of the monitored data between the central processing unit and the external memory;
further monitoring the data exchanged between the plurality of internal registers and the central processing unit; and,
halting the processing of the set of instructions in dependence upon the exchange of a predetermined value of the monitored data between the central processing unit and the plurality of internal registers.

3. The system of claim 1 or method of claim 2 wherein the plurality of internal registers is memory mapped.

4. The system or method of any preceding claim wherein the logic means includes switching logic arranged to switch between the monitored data exchanged with the external memory and the monitored data exchanged with the plurality of internal registers.

5. The system or method of any preceding claim wherein the logic means includes a background debug mode interface, coupled to receive breakpoint instructions for setting the predetermined value to be monitored.
